# EUROPÄISCHE PATENTSCHRIFT

(11) **EP 3 303 484 B1**
(45) Veröffentlichungstag und Bekanntmachung des Hinweises auf die Patenterteilung: **10.07.2019**
(21) Anmeldenummer: 16724029.0
(22) Anmeldetag: 19.05.2016
(51) Int. Cl.: C09D 5/02, C09D 5/00, C09D 7/00, C09D 7/40, C09D 127/18

(54) **MINDESTENS TEMPORÄR, SPRÜHFÄHIGE, NICHT KORROSIVE OBERFLÄCHENFUNKTIONSBESCHICHTUNG**
AT LEAST TEMPORARY, SPRAYABLE, NONCORROSIVE FUNCTIONAL SURFACE COATING
REVÊTEMENT FONCTIONNEL DE SURFACE AU MOINS TEMPORAIRE, PULVÉRISABLE ET NON CORROSIF

(30) Priorität: 28.05.2015 DE 102015006921; 05.10.2015 DE 102015012820
(43) Veröffentlichungstag der Anmeldung: 11.04.2018
(73) Patentinhaber: Karau, Michael, 48565 Steinfurt (DE)
(72) Erfinder: Karau, Michael, 48565 Steinfurt (DE)
(74) Vertreter: Kruspig, Volkmar
(86) Internationale Anmeldenummer: PCT/EP2016/061243
(87) Internationale Veröffentlichungsnummer: WO 2016/188847

(56) Entgegenhaltungen:
- EP-A2- 2 111 956
- EP-A2- 2 123 738
- DE-B3- 10 343 441
- Christian Hackenberger ET AL: "ACETATE", Roempp online, 1. November 2008 (2008-11-01), XP055292260, Gefunden im Internet: URL:https://roempp.thieme.de/roempp4.0/do/ data/RD-01-00434 [gefunden am 2016-07-29]

## Beschreibung

Die Erfindung betrifft eine mindestens temporär wirkende, sprühfähige, nicht korrosive Oberflächenfunktionsbeschichtung auf der Basis einer alkoholischen Acetatlösung gemäß Oberbegriff des Anspruchs 1.

Aus der DE 103 43 441 B3 ist die Verwendung eines flüssigen Gleitmittels zum Auftragen auf den Kantenbereich einer Platte, insbesondere einer Möbelplatte vorbekannt. Bei dem bekannten Gleitmittel wurde festgestellt, dass ein Seifenanteil einen aggressiven Gleitfilm gegenüber an der Platte seitlich angesetzten, mit Teflon beschichteten Andruckrollen bildet. Dies führt zu einem möglichen Lösen der Teflon-Beschichtung.

Ausgehend von diesem Nachteil soll ein Gleitmittel auf der Basis einer wässrigen alkoholischen Polyglykol-Lösung geschaffen werden, welches vollständig verdunstet, so dass auf eine nachträgliche Reinigung der Oberfläche der entsprechenden Platte oder eines Kantenbandes verzichtet werden kann. Das vorbekannte Gleitmittel nach DE 103 43 441 B3 weist wenigstens 25% bis 65% Wasser auf, wobei der Alkoholanteil bis zu 50% und der Polyglykolanteil bei bis zu 25% liegt. Der hohe Anteil von Wasser führt jedoch zu einem äußerst korrosiven Verhalten bei all den mit dem Gleitmittel in Berührung kommenden Oberflächenmaterialien, welche selbst korrosionsanfällig sind, was insbesondere bei entsprechenden Maschinen und Anlagen von Nachteil ist.

Weiterhin ist aus der DE 100 42 431 C1 ein Verfahren zum Bearbeiten einer Platte aus Holz oder einem Holzwerkstoff bekannt, bei dem an mindestens einer Kante ein Kantenband, insbesondere ein Kantenband aus Kunststoff angeleimt wird. Ein ein- oder beidseitig über die Platte ragender Überstand des Kantenbandes wird mit Hilfe eines Fräsers entfernt. Vor dem Abfräsen wird auf das Kantenband und/oder die Platte ein eine elektrostatische Aufladung der benetzten Bereiche und/oder der Frässpäne verhinderndes fluides Mittel aufgetragen. Dieses fluide Mittel besteht bevorzugt aus einer Mischung von Wasser, Alkohol und Tensiden. Auch wenn durch den Einsatz von insbesondere Wasser in der Mischung elektrostatische Aufladungen von Spänen verhindert werden können, ist die wasserbedingte korrosive Wirkung nachteilig. Weiterhin mag zwar eine Reinigung der Oberflächen der so behandelten Materialien gelingen, jedoch ist es notwendig, zur Nachbehandlung der Oberflächen, insbesondere bei dem Ziel der Erhöhung des Glanzgrades, Poliermittel einzusetzen, was einen weiteren Arbeitsgang erfordert. Möglicherweise verbleibende Reste der in der Mischung enthaltenen Tenside führen im Übrigen zu einer unangenehmen Haptik mit dem Gefühl einer schmierenden Oberfläche.

Aus dem Vorgenannten ist es Aufgabe der Erfindung, eine weiterentwickelte, sprühfähige und nicht korrosive, d.h. weitgehend wasserfreie Oberflächenfunktionsbeschichtung anzugeben, welche auf einer alkoholischen Acetatlösung basiert und die über solche Eigenschaften verfügt, dass neben einer Reinigungswirkung sichergestellt ist, dass die jeweils behandelten Oberflächen über optimierte Eigenschaften, z.B. im Sinne der Erhöhung des Glanzgrades, der Verbesserung der Haptik, der Ausbildung eines Schutzfilms oder dergleichen verfügen.

Die Lösung der Aufgabe der Erfindung erfolgt mit der Merkmalskombination nach Anspruch 1. Erfindungsgemäß sind darüber hinaus spezielle Verwendungen der diesbezüglichen Oberflächenfunktionsbeschichtung gemäß der Lehre nach den Ansprüchen 4 bis 7. Die Unteransprüche gestalten die Oberflächenfunktionsbeschichtung in zweckmäßiger Weise aus und bilden diese fort.

Die mindestens temporär wirkende, sprühfähige, nicht korrosive Oberflächenfunktionsbeschichtung auf der Basis einer alkoholischen Acetatlösung greift zunächst auf einen in Pulverform vorliegenden, funktionsbestimmenden Stoff zurück, der einer Schmelze zugegeben ist, um die Pulverpartikel des funktionsbestimmenden Stoffes einzubetten.

Anschließend wird die derart angereicherte Schmelze durch Zugabe eines Glykols in eine Lösung überführt. Durch Einbringen, insbesondere Einträufeln der Lösung in eine geringe Menge demineralisiertes Wasser als Trägermittel entstehen Assoziationskolloide, welche die eingebetteten Pulverpartikel umhüllen.

Der so vorbehandelte funktionsbestimmende Stoff, der ansonsten überhaupt nicht löslich ist, wird der Ausgangslösung, d.h. der alkoholischen Acetatlösung zugegeben.

Als funktionsbestimmende Stoffe kommen Polytetrafluoräthylen-Nanopartikel, metallische Pulver, anorganische Pigmente und/oder keimreduzierende Mittel oder sonstige Stoffe zum Einsatz, die für das erfindungsgemäße Ziel der Verbesserung der Eigenschaften der Oberfläche der zu behandelnden Materialien besonders geeignet sind.

Damit muss erfindungsgemäß keine Rücksicht auf eine Lösbarkeit dieser funktionsbestimmenden Stoffe genommen werden, da die erfindungsgemäße Lehre ein Einbetten und Umhüllen der entsprechenden Partikel gestattet, so dass diese im enthaltenen sprühfähigen Oberflächenbeschichtungsmaterial gleichmäßig verteilt sind. Die sprühfähige Oberflächenbeschichtung behält ihre klare, durchscheinende, transparente Struktur. Die gelösten Partikel sind in der sprühfähigen Funktionsbeschichtung nicht mit bloßem Auge erkennbar. Die vorerwähnte Schmelze ist auf der Basis nichtionischer, schaumarmer Tenside, insbesondere auf der Basis von Blockcopolymeren bereitgestellt.

Der angereicherten Schmelze wird insbesondere Hexylenglykol zugegeben. Ergänzend kann der Gesamtmischung Salz zur Ionenbildung beigefügt werden. Der Wassergehalt der einsatzbereiten Gesamtmischung ist kleiner als 10%, insbesondere kleiner als 2% (Gew.-%).

Eine erfindungsgemäße Verwendung der Oberflächenfunktionsbeschichtung besteht beispielsweise darin, eine Reinigung und eine Glättung von Kunststoffoberflächen durchzuführen. Insbesondere kann die Oberflächenfunktionsbeschichtung auch zur Behandlung von Kantenbereichen von Platten, insbesondere Möbelplatten eingesetzt werden, wobei es sich hier um Kantenbereiche aus einem insbesondere Kunststoffmaterial handelt.

Darüber hinaus besteht die Möglichkeit, die erfindungsgemäße Oberflächenfunktionsbeschichtung zur Behandlung von Kanten oder Rändern von Displays, Brillengläsern oder dergleichen strahlungsdurchlässigen flächigen Gebilden zu nutzen, insbesondere um eine Reduzierung der Einkopplung oder der Auskopplung von Streulicht zu bewirken. Es lassen sich also durch die Zugabe spezieller funktionsbestimmender Stoffe die optischen Eigenschaften diesbezüglich strahlungsdurchlässiger, d.h. transparenter Materialien beeinflussen.

Ein Ausführungsbeispiel der Erfindung gestaltet sich wie folgt.

Beispielhaft wird eine Schmelze aus Poloxamer gebildet, wobei diesbezüglich die Schmelztemperatur bei ca. 120° C liegt. Dieser Schmelze wird dann als beispielhaftem funktionsbestimmendem Stoff ein PTFE-Nanopartikelpulver zugegeben. Im Ergebnis findet eine Schmelzeinbettung dieser Nanopartikel statt. Die Zugabe der Nanopartikel erfolgt sukzessive und unter Rühren der Schmelze.

Der so geschaffene Ausgangsstoff wird mit Hexylenglykol versetzt und geht in Lösung.

Die erhaltene Lösung wird in entmineralisiertes Wasser gegeben. Hiernach bilden sich Mizellen. Ein Aufkonzentrieren ist selbstverständlich möglich. Die gegebenenfalls aufkonzentrierte Mischung wird dann der alkoholischen Acetatlösung zugegeben und steht als sprühfähige, nicht korrosive Oberflächenfunktionsbeschichtung für die entsprechenden Anwendungen zur Verfügung.

Beim Auftrag der Oberflächenfunktionsbeschichtung, beispielsweise auf einem flächigen Kunststoffmaterial, schließen die PTFE-Nanopartikel Poren in der Kunststoffoberfläche mit der Folge einer deutlich spürbaren Oberflächennetzung und verbesserter Haptik. Ein nachträgliches Polieren unter Einsatz von Poliermitteln, insbesondere Wachsen kann entfallen. Das oben erwähnte entmineralisierte bzw. destillierte Wasser wird nur als Trägermitteln eingesetzt. Der Gesamtwassergehalt in der Mischung ist hierbei kleiner 10%, insbesondere kleiner 2%, so dass die Funktionsbeschichtung nicht korrosiv ist. Die Verwendung von Korrosionsinhibitoren kann demnach entfallen.

Bei Bedarf kann die Oberflächenfunktionsbeschichtung leitfähige Eigenschaften erhalten, indem für den Erhalt freier Ladungsträger, beispielsweise durch Salzzugabe gesorgt wird.

Anstelle der PTFE-Nanopartiket können beispielsweise metallische Pulver für Glanzeffekte, anorganische Pigmente bzw. Farbpartikel, Antisporen- oder Antischimmelmittel, d.h. fungizide Mittel oder Ähnliches eingesetzt werden.

Die erfindungsgemäße Oberflächenfunktionsbeschichtung ist frei von Benzinen, was die Problematik des Einsatzes der Beschichtung und der zulässigen maximalen Arbeitsplatzkonzentration von Schadstoffen entspannt. Weiterhin kann der Funktionsbeschichtung ein mehrwertiger Alkohol, z.B. Isopropanol zugegeben werden, welches als Trennmittel wirkt. Damit kann Isopropanol üblicherweise eingesetzte Silikone als Trennmittel ersetzen. Silikone haben zwar positive Gleit- und Trenneigenschaften. Allerdings muss für folgende Ver- und Bearbeitungsschritte ein aufwendiger Reinigungsprozess vollzogen werden, um alle Silikonbestandteile von der behandelten oder zu behandelnden Oberfläche zu entfernen. Kommen gemäß Stand der Technik Poliermittel, insbesondere Polierrollen zum Einsatz, nehmen diese Silikonreste auf mit der Folge einer zunehmenden Sättigung und dem Problem des Hinterlassens von Silikonstreifen bzw. Silikonpartikeln auf den polierten Oberflächen. Bei dem Einsatz der erfindungsgemäß silikonfreien Mischung entfällt dieses Problem.

## Patentansprüche

1. Mindestens temporär wirkende, sprühfähige, nicht korrosive Oberflächenfunktionsbeschichtung auf der Basis einer alkoholischen Acetatlösung,
**dadurch gekennzeichnet, dass**
mindestens ein, in Pulverform vorliegender funktionsbestimmender Stoff einer Schmelze zugegeben ist, um die Pulverpartikel einzubetten, anschließend die derart angereicherte Schmelze durch Zugabe eines Glykols in eine Lösung überführt wird sowie im Anschluss hieran durch Einbringen, insbesondere Einträufeln der Lösung in demineralisiertes Wasser als Trägermittel Assoziationskolloide entstehen, welche die eingebetteten Pulverpartikel umhüllen, wobei der so vorbehandelte funktionsbestimmende Stoff der alkoholischen Acetatlösung zugegeben ist, als funktionsbestimmender Stoff Polytetrafluoräthylen (PTFE)-Nanopartikel, metallische Pulver, anorganische Pigmente und/oder keimreduzierende Mittel eingesetzt sind, die Schmelze auf der Basis nichtionischer, schaumarmer Tenside, insbesondere auf der Basis von Blockcopolymeren bereitgestellt ist und der Wassergehalt der Gesamtmischung kleiner 10%, insbesondere kleiner 2% ist.

2. Oberflächenfunktionsbeschichtung nach Anspruch 1,
**dadurch gekennzeichnet, dass**
der angereicherten Schmelze Hexylenglykol zugegeben ist.

3. Oberflächenfunktionsbeschichtung nach einem der vorangegangenen Ansprüche,
**dadurch gekennzeichnet, dass**
der Gesamtmischung Salz zur Ionenbildung zugegeben ist.

4. Verwendung einer Oberflächenfunktionsbeschichtung nach einem der Ansprüche 1 bis 3 zur Reinigung und Glättung von Kunststoffflächen.

5. Verwendung der Oberflächenfunktionsbeschichtung nach einem der Ansprüche 1 bis 3 zur Behandlung von Kantenbereichen von Platten, insbesondere Möbelplatten.

6. Verwendung der Oberflächenfunktionsbeschichtung nach einem der Ansprüche 1 bis 3 zur Aufbringung auf Kunststoff-Kantenbändern vor, während und/oder nach dem Fixieren der Kantenbänder an Platten, insbesondere Möbelplatten.

7. Verwendung der Oberflächenfunktionsbeschichtung nach einem der Ansprüche 1 bis 3 zur Behandlung von Kanten oder Rändern von Displays, Brillengläsern oder dergleichen strahlungsdurchlässigen flächigen Gebilden zur Reduzierung der Einkopplung oder zur Reduzierung der Aussendung von Streulicht.

## Claims

1. An at least temporarily acting, sprayable, noncorrosive functional surface coating on the basis of an alcoholic acetate solution,
**characterized in that**
at least one function-determining substance present in powder form is added to a melt in order to embed the powder particles, the melt enriched in such a manner is subsequently transferred into a solution by adding glycol, and following this, association colloids develop by introducing, in particular by instilling the solution into demineralized water as a carrier agent, which association colloids wrap the embedded powder particles, wherein the function-determining substance treated this way is added to the alcoholic acetate solution, polytetrafluorethylene (PTFE) nanoparticles, metallic powders, inorganic pigments and/or germ-reducing agents are employed as the function-determining substance, the melt is provided on the basis of non-ionic, low-foam surfactants, in particular on the basis of block copolymers, and the water content of the total mixture is less than 10%, in particular less than 2%.

2. The functional surface coating according to claim 1,
**characterized in that**
hexylene glycol is added to the enriched melt.

3. The functional surface coating according to any one of the preceding claims,
**characterized in that**
salt for ion formation is added to the total mixture.

4. Use of the functional surface coating according to any one of the claims 1 to 3 for cleaning and smoothing of plastic surfaces.

5. Use of the functional surface coating according to any one of claims 1 to 3 for treating edge areas of boards, in particular furniture boards.

6. Use of the functional surface coating according to any one of claims 1 to 3 for application to plastic edge bands prior to, during and/or after fixing the edge bands to boards, in particular furniture boards.

7. Use of the functional surface coating according to any one of claims 1 to 3 for treating edges or borders of displays, eyeglass lenses or similar translucent two-dimensional structures for reducing the coupling of scattered light or for reducing the emission of scattered light.

## Revendications

1. Revêtement fonctionnel de surface pulvérisable non corrosif agissant au moins temporairement à base d'une solution alcoolique d'acétate,
**caractérisé en ce que**
au moins une substance en forme de poudre et déterminant la fonction est ajoutée à une masse en fusion pour enrober les particules de poudre, puis la masse en fusion ainsi enrichie est transférée en une solution par addition d'un glycol, suite à quoi il se forme des colloïdes d'association par introduction, en particulier par gouttage, de la solution dans de l'eau déminéralisée à titre de milieu porteur, les colloïdes enveloppant les particules de poudre enrobées, la substance déterminant la fonction ainsi prétraitée est ajoutée à la solution alcoolique d'acétate, des nanoparticules de polytétrafluoroéthylène (PTFE), des poudres métalliques, des pigments anorganiques et/ou des produits réduisant les germes sont utilisés à titre de substance déterminant la fonction, la masse en fusion est préparée sur la base de tensioactifs non ioniques peu moussants, en particulier sur la base de copolymères blocs, et la teneur en eau de l'ensemble du mélange est inférieure à 10 %, en particulier inférieure à 2 %.

2. Revêtement fonctionnel de surface selon la revendication 1,
**caractérisé en ce que**
de l'hexylèneglycol est ajouté à la masse en fusion enrichie.

3. Revêtement fonctionnel de surface selon l'une des revendications précédentes,
**caractérisé en ce que**
du sel est ajouté à l'ensemble du mélange pour la formation d'ions.

4. Utilisation d'un revêtement fonctionnel de surface selon l'une des revendications 1 à 3 pour nettoyer et lisser des surfaces en matière plastique.

5. Utilisation d'un revêtement fonctionnel de surface selon l'une des revendications 1 à 3 pour traiter des zones d'arête de panneaux, en particulier de panneaux de meuble.

6. Utilisation d'un revêtement fonctionnel de surface selon l'une des revendications 1 à 3 pour l'appliquer sur des bandes de chant en matière plastique pendant et/ou après la fixation des bandes de chant sur des panneaux, en particulier des panneaux de meuble.

7. Utilisation d'un revêtement fonctionnel de surface selon l'une des revendications 1 à 3 pour traiter des arêtes ou des bords d'écrans, des verres de lunettes ou des structures similaires surfaciques perméables au rayonnement, pour réduire l'injection ou pour réduire l'émission de lumière dispersée.
